# EUROPEAN PATENT APPLICATION

(11) **EP 3 466 557 A1**
(43) Date of publication of application: **10.04.2019**
(21) Application number: 17802512.8
(22) Date of filing: 24.04.2017
(51) Int. Cl.: B21D 28/00, B21D 28/02, B21D 37/16, B21D 53/10, B21J 1/06, B21J 5/00, B21J 5/08, C21D 1/18, C21D 9/00, C21D 9/40, F16C 33/62, F16C 33/64

(54) **RACE PRODUCTION METHOD**

(30) Priority: 23.05.2016 JP 2016102344
(71) Applicant: NTN Corporation, Osaka-shi, Osaka 550-0003 (JP)
(72) Inventor: MIZUTA, Kohei, Kuwana-shi Mie 511-0867 (JP); OHKI, Chikara, Kuwana-shi Mie 511-0867 (JP); FUJIWARA, Hiroki, Kuwana-shi Mie 511-0867 (JP)
(74) Representative: Bockhorni & Brüntjen Partnerschaft Patentanwälte mbB
(86) International application number: PCT/JP2017/016168
(87) International publication number: WO 2017/203914

(57) **Abstract**

A bearing ring manufacturing method includes heating a steel material (2) in a forming unit (3) to a temperature equal to or higher than an A₁ transformation point and subsequently punching a portion of the steel material (2) in a form of a ring in the forming unit (3), and thereafter subjecting the steel material (2) in the form of the ring to a quenching treatment in the forming unit (3) to obtain the bearing washer. The steel material (2) is heated and punched while tension is applied to the steel material (2) in at least one direction along a surface of the steel material (2) between first and second portions of the steel material (2) distant from each other with the forming unit (3) posed therebetween. The tension is applied to increase a distance between the first and second portions of the steel material by a length corresponding to an amount by which the distance between the first and second portions of the steel material thermally expands as the steel material is heated to the temperature in the step of heating and punching. The forming unit includes a first die (30) for punching the steel material (2) and a second die (36) facing the first die (30), the first die (30) or the second die (31, 32) having a forming surface having a concave curved surface (35A).

## Description

### TECHNICAL FIELD

The present invention relates to a method for manufacturing a bearing washer.

### BACKGROUND ART

Conventionally, a thrust needle bearing has a bearing washer manufactured through the following process: Initially, a rolled thin plate shaped steel material is coiled to prepare a coiled material. Subsequently, the coiled material is uncoiled to present the thin plate shaped steel material which is in turn punched and formed sequentially. As a result, a ring shaped formed body generally having a shape of a bearing washer is obtained. Subsequently, a setup step before a heat treatment is performed. Then, the heat treatment such as a carburizing treatment or the like is applied to the ring-shaped formed body. Thereafter, blast is applied to cool the formed body to thus quench the formed body. Finally, the quenched formed body is press-tempered (i.e., undergoes a tempering treatment) and thus has its shape adjusted. Through the above process, a bearing washer of a thrust needle bearing is manufactured.

Furthermore, as a technique employed to form a steel material, for example, a die-quenching method as disclosed in Japanese Patent Laying-Open No. 2008-296262 (Patent Literature 1) is known. This die-quenching method is a technique used to perform a quenching treatment by press-forming a heated steel material and simultaneously rapidly cooling the material by a die.

### CITATION LIST

### PATENT LITERATURE

PTL 1: Japanese Patent Laying-Open No. 2008-296262

### SUMMARY OF INVENTION

### TECHNICAL PROBLEM

However, the bearing washer formed by the die-quenching method may have a problem called edge loading. In edge loading, a rolling element and bearing washers sandwiching the rolling element form a linear contact surface and thus come in contact with each other, so that an end portion of the contact surface is particularly liable to be adversely affected by an external force load. There is also a possibility that edge loading may cause the rolling element to cause differential slip. Differential slip is mutually opposite slipping movements caused at portions of surfaces between a rolling rolling element and bearing washers sandwiching the rolling element, and differential slip may impair in operability a bearing including the bearing washers. Japanese Patent Laying-Open No. 2008-296262 does not disclose any approach against these problems.

The present invention has been made in view of the above problems, and it is an object of the present invention to provide a method for manufacturing a bearing washer capable of suppressing damage caused by edge loading, and reducing heat generated by differential slip.

### SOLUTION TO PROBLEM

According to the present invention a method for manufacturing a bearing washer comprises: preparing a steel material and a forming unit for obtaining the bearing washer from the steel material; setting the steel material in the forming unit; and heating the steel material in the forming unit to a temperature equal to or higher than an A₁ transformation point and subsequently punching a portion of the steel material in a form of a ring in the forming unit, and thereafter subjecting the steel material in the form of the ring to a quenching treatment in the forming unit to obtain the bearing washer. The steel material is heated and punched while tension is applied to the steel material in at least one direction along a surface of the steel material between first and second portions of the steel material distant from each other with the forming unit posed therebetween. The tension is applied to increase a distance between the first and second portions of the steel material by a length corresponding to an amount by which the distance between the first and second portions of the steel material thermally expands as the steel material is heated to the temperature in the step of heating and punching. The forming unit includes a first die for punching the steel material and a second die facing the first die, the first die or the second die having a forming surface having a concave curved surface.

According to the above method, a single forming unit can be used to perform the steps of heating a steel material, punching the steel material and quenching the steel material all temporally continuously successively and thus allow each step to require a reduced period of time and hence be performed significantly efficiently. Furthermore, the tension applied to the steel material, as described above, can enhance precision in punching a bearing washer out of the steel material.

In the above bearing washer manufacturing method the first or second die of the forming unit has a forming surface having a concave curved surface. As a result, the bearing washer is in a manner such that a contact surface on a bearing washer raceway surface thereof which a rolling element contacts has a convex curved surface. This can suppress damage caused by edge loading caused at the bearing washer raceway surface formed, or can reduce heat generated by differential slip.

In the above bearing washer manufacturing method preferably a die of the forming unit facing a die having the concave curved surface has a flat surface. Thus, the formed bearing washer on a side thereof opposite to a bearing washer raceway surface which a rolling element contacts, and out of contact with the rolling element, is formed to have a flat surface. As a result, a thrust needle bearing including the bearing washer generally has the flat surface as an outermost surface, and thus has a flat outermost surface, which helps to place and store the thrust needle bearing.

In the above bearing washer manufacturing method preferably the steel material contains 0.4% by mass or more of carbon, has a thickness of 2 mm or less, and is punched in a form of a ring in a direction of the thickness. Thereby, a bearing washer having a large hardness after a quenching treatment can be manufactured.

In the above bearing washer manufacturing method preferably the steel material is heated in at least one method selected from the group consisting of ohmic heating, indirect resistor heating, induction heating, contact heat transfer, and far-infrared heating. In the above bearing washer manufacturing method preferably the bearing washer with a hardness of 700 HV or more is obtained. The steel material subjected to a sufficient quenching treatment allows a bearing washer having large hardness to be manufactured through the quenching treatment.

In the above bearing washer manufacturing method preferably before the quenching treatment the steel material in the form of the ring is subjected to a forming step in the forming unit, and in the forming step, the steel material in the form of the ring has an inward or outward peripheral portion bent to be directed in the direction of the thickness of the steel material in the form of the ring. In this way, the forming step is also performed in the same forming unit as used to perform the steps of heating, punching and quenching the steel material through a single process temporally continuously successively. When this is compared with performing the steps separately, the former allows production to be done through a shorter process.

### ADVANTAGEOUS EFFECTS OF INVENTION

The present invention can thus suppress damage caused by edge loading caused at a bearing washer raceway surface formed, or can reduce heat generated by differential slip.

### BRIEF DESCRIPTION OF DRAWINGS

Fig. 1 is a schematic cross section showing a configuration of a thrust needle roller bearing according to an embodiment of the present invention.
Fig. 2 is a flow chart schematically showing a method for manufacturing a bearing washer according to an embodiment of the present invention.
Fig. 3 represents in the method for manufacturing a bearing washer according to an embodiment of the present invention (A) how a current supplied to a steel material changes with time, (B) how the steel material's temperature changes with time, (C) a press's stroke, (D) a hydraulic or pneumatic chuck's operation, and (E) first and second clamps' operations.
Fig. 4 is a schematic perspective view showing a coiled material used in the method for manufacturing a bearing washer according to an embodiment of the present invention.
Fig. 5 is a block diagram showing a configuration of a machine parts manufacturing apparatus according to an embodiment of the present invention.
Fig. 6 is a schematic cross section showing a state in which a steel material is set in a press using a first example of a forming unit in the method for manufacturing a bearing washer according to an embodiment of the present invention.
Fig. 7 is a schematic cross section showing a state in which an electric current is supplied from a conduction terminal to the steel material by using the first example of the forming unit in the method for manufacturing a bearing washer according to the embodiment of the present invention.
Fig. 8 is a schematic cross section showing a state in which the steel material is punched by a press using the first example of the forming unit in the method for manufacturing a bearing washer according to the embodiment of the present invention.
Fig. 9 is a schematic cross section showing a state in which the steel material punched in the form of a ring is quenched by using the first example of the forming unit in the method for manufacturing a bearing washer according to the embodiment of the present invention.
Fig. 10 is a schematic cross section showing a shape of a bearing washer formed using the first example of the forming unit.
Fig. 11 is a schematic cross section showing a state in which a steel material is set in a press using a second example of the forming unit in the method for manufacturing a bearing washer according to an embodiment of the present invention.
Fig. 12 is a schematic cross section showing a state in which a steel material is set in a press using a third example of the forming unit in the method for manufacturing a bearing washer according to an embodiment of the present invention.
Fig. 13 is a schematic cross section showing a state in which an electric current is supplied from a conduction terminal to the steel material by using the third example of the forming unit in the method for manufacturing a bearing washer according to the embodiment of the present invention.
Fig. 14 is a schematic cross section showing a state in which the steel material is punched by a press using the third example of the forming unit in the method for manufacturing a bearing washer according to the embodiment of the present invention.
Fig. 15 is a schematic cross section showing a state in which the steel material punched in the form of a ring undergoes a forming step in the method for manufacturing a bearing washer according to the embodiment of the present invention.
Fig. 16 is a schematic cross section showing a state in which the steel material punched in the form of a ring is quenched by using the third example of the forming unit in the method for manufacturing a bearing washer according to the embodiment of the present invention.
Fig. 17 is a schematic cross section showing a shape of a bearing washer formed using the third example of the forming unit.
Fig. 18 is a schematic plan view showing a water cooling circuit provided in a press used in the method for manufacturing a bearing washer according to an embodiment of the present invention.
Fig. 19 is a schematic view for illustrating a method for applying tension to a steel material using a steel material supply unit.
Fig. 20 is a schematic view for illustrating a method for applying tension to a steel material by using a steel material correction unit.
Fig. 21 is a schematic diagram for illustrating a heating method using ohmic heating.
Fig. 22 is a schematic view for illustrating a heating method using indirect resistor heating.
Fig. 23 is a schematic view for illustrating a heating method using induction heating.
Fig. 24 is a schematic view for illustrating a heating method using contact heat transfer.
Fig. 25 is a schematic cross section showing a state in which a steel material punched in the form of a ring is quenched by using a fourth example of the forming unit in the method for manufacturing a bearing washer according to an embodiment of the present invention.
Fig. 26 is a schematic view for illustrating a method for manufacturing a bearing washer in a comparative example.
Fig. 27 is a schematic view for illustrating the method for manufacturing a bearing washer in the comparative example.
Fig. 28 is a schematic view for illustrating the method for manufacturing a bearing washer in the comparative example.
Fig. 29 is a schematic view for illustrating the method for manufacturing a bearing washer in the comparative example.
Fig. 30 is a schematic view for illustrating the method for manufacturing a bearing washer in the comparative example.
Fig. 31 is a schematic view for illustrating the method for manufacturing a bearing washer in the comparative example.
Fig. 32 is a schematic view for illustrating the method for manufacturing a bearing washer in the comparative example.
Fig. 33 is a schematic view for illustrating the method for manufacturing a bearing washer in the comparative example.
Fig. 34 is a schematic view for illustrating the method for manufacturing a bearing washer in the comparative example.
Fig. 35 is a schematic cross section showing a machine parts manufacturing apparatus used for manufacturing a bearing washer according to an example.
Fig. 36 is an enlarged schematic view showing a recessed curved surface of a pressing portion used for manufacturing a bearing washer according to an example.
Fig. 37 is an enlarged schematic view showing a convex surface of a bearing washer formed in an example.
Fig. 38 is a photograph of a structure of steel in a bearing washer according to an example.

### DESCRIPTION OF EMBODIMENTS

Hereinafter reference will be made to the drawings to describe the present invention in embodiments. In the drawings, identical or corresponding components are identically denoted and will not be described redundantly.

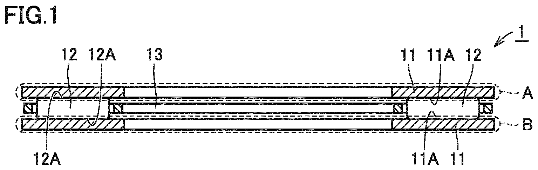

Initially, a configuration of a thrust needle roller bearing 1 according to one embodiment of the present invention will be described. Fig. 1 shows a structure in cross section of thrust needle roller bearing 1 in its axial direction. Referring to Fig. 1, thrust needle roller bearing 1 mainly includes a pair of bearing washers 11, a plurality of needle rollers 12, and a cage 13.

Bearing washer 11 is made of steel having a carbon concentration of 0.4% by mass or more, for example, and is in the form of a disc. Bearing washer 11 has a major surface with a bearing washer raceway surface 11A which needle roller 12 contacts. The paired bearing washers 11 are disposed to have their respective bearing washer raceway surfaces 11A facing each other. Bearing washer 11 has a Vickers hardness of 700 HV or more. Bearing washer 11 has bearing washer raceway surface 11A with a flatness of about 10 µm.

Needle roller 12 is made of steel and circumferentially has a roller rolling contact surface 12A. As shown in Fig. 1, each needle roller 12 is disposed between the pair of bearing washers 11 with roller rolling contact surface 12A in contact with bearing washer raceway surface 11A.

Cage 13 is made of resin, for example, and holds the plurality of needle rollers 12 at a predetermined pitch in a circumferential direction of bearing washer 11. More specifically, cage 13 has an annular shape and a plurality of pockets (not shown) formed equidistantly in the circumferential direction. Cage 13 accommodates needle rollers 13 in the pockets.

The plurality of needle rollers 12 are held by cage 13 rollably on a circumferentially extending annular raceway of bearing washer 11. By the above arrangement, thrust needle roller bearing 1 includes a pair of bearing washer 11 located in an upper region A shown in Fig. 1 and surrounded by a dotted line and bearing washer 11 located in a lower region B shown in Fig. 1 and surrounded by a dotted line such that bearing washers 11 are rotatable relative to each other. Bearing washer 11 is manufactured in a method for manufacturing a bearing washer according to the present embodiment described below.

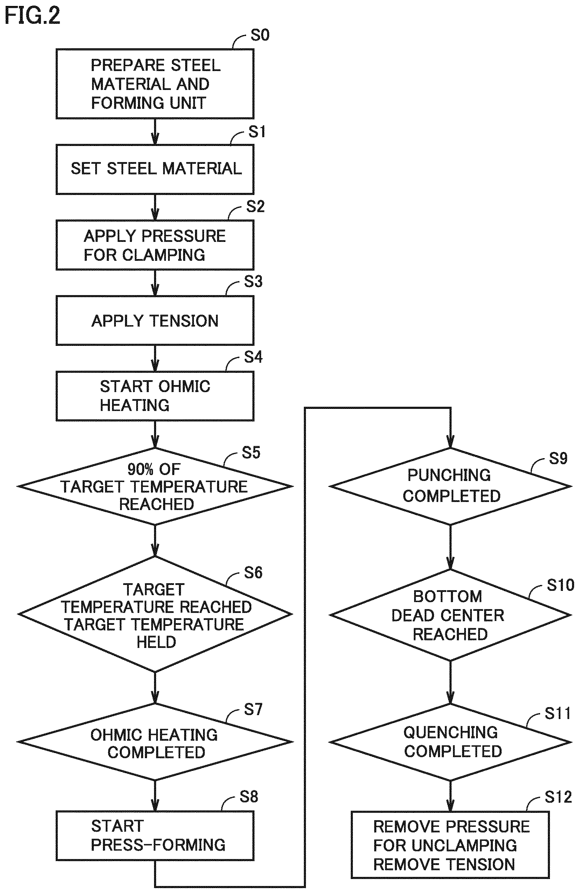

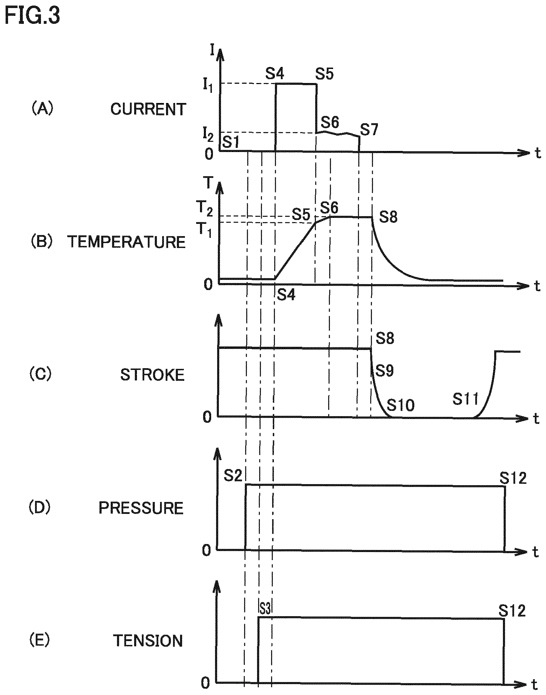

Hereinafter, a method for manufacturing a bearing washer according to the present embodiment will be described. Fig. 2 is a flow chart schematically showing the method for manufacturing a bearing washer according to the present embodiment. Fig. 3 represents in the method for manufacturing a bearing washer according to the present embodiment (A) how a current supplied to a steel material changes with time, (B) how the steel material's temperature changes with time, (C) a press's stroke, (D) a hydraulic or pneumatic chuck's operation, and (E) first and second clamps' operations. Hereinafter, referring mainly to the flowchart of Fig. 2 and the timing plots of Fig. 3, the method for manufacturing the bearing washer according to the present embodiment will be described in the order of "S0 to S12" shown in Figs. 2 and 3.

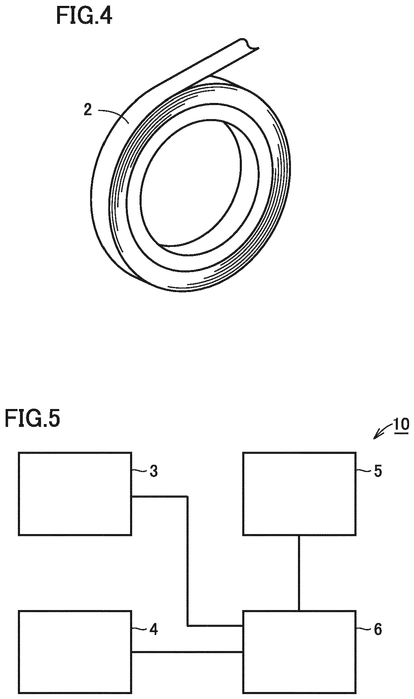

Initially, a steel material serving as a material for obtaining bearing washer 11 is prepared (S0). Specifically, referring to Fig. 4, a coiled material 2 as a steel material is prepared. As shown in Fig. 4, coiled material 2 is a rolled thin plate shaped steel material wound in the form of a coil.

Coiled material 2 is made of steel containing, for example, 0.4% by mass or more of carbon. More specifically, coiled material 2 is made of, for example, SAE 1070, JIS S40C, S45C, S50C, S55C and S60C serving as carbon steel materials for mechanical structures, JIS SUJ 2 serving as high carbon chromium bearing steel, JIS SK85 and SK95 serving as carbon tool steel materials, JIS SCM 440 and SCM 445 serving as alloy steel materials for mechanical structures, JIS SKS5 and SKS11 serving as alloy tool steel materials, JIS SUP 13 serving as a spring steel material, or JIS SUS440C serving as a stainless steel material. Coiled material 2 is a thin plate-shaped steel material having a thickness of 2 mm or less.

Furthermore, a machine parts manufacturing apparatus 10 for obtaining bearing washer 11 from coiled material 2 is prepared (S0). Referring to Fig. 5, a configuration of machine parts manufacturing apparatus 10 will be described. Machine parts manufacturing apparatus 10 includes a forming unit (a processing unit) 3, a heating unit 4, a tensioning unit 5, and a controller 6.

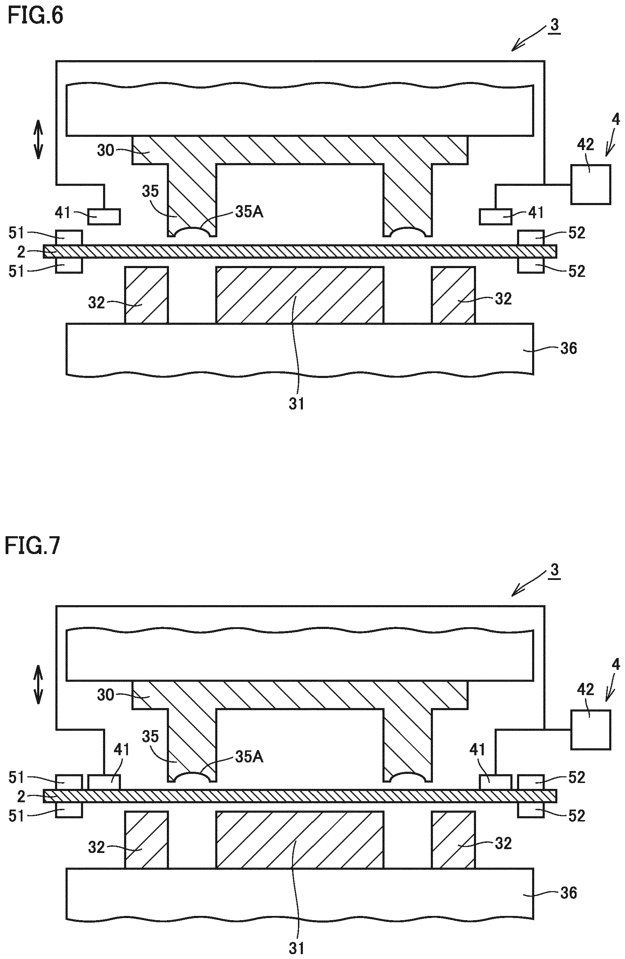

Initially, a first example of a configuration of processing unit 3 will be described with reference to Fig. 6. Fig. 6 shows a cross section of processing unit 3 taken in its vertical direction (a direction indicated in the figure by a double-headed arrow). Processing unit 3 is constructed as a press for punching a portion of coiled material 2 and also rapidly cooling the punched portion of coiled material 2 to quench it. Processing unit 3 mainly has a pressing die 30 as a first die (e.g., a punch), and forming dies 31 and 32 as a second die (e.g., a die) facing pressing die 30 in the vertical direction in Fig. 6.

Pressing die 30 as the first die has a cylindrical pressing portion 35 as a portion for punching coiled material 2. Pressing portion 35 is brought into contact with coiled material 2 to punch coiled material 2. Furthermore, a concave curved surface 35A is formed on a lowermost surface of pressing portion 35, as observed in Fig. 6, that is, a surface thereof facing coiled material 2. Note that while concave curved surface 35A may be formed on pressing die 30, it may alternatively be formed on forming dies 31 and 32. Further, pressing die 30 can be caused by a driving mechanism (not shown) to stroke so as to approach forming dies 31, 32 or move away from forming dies 31, 32.

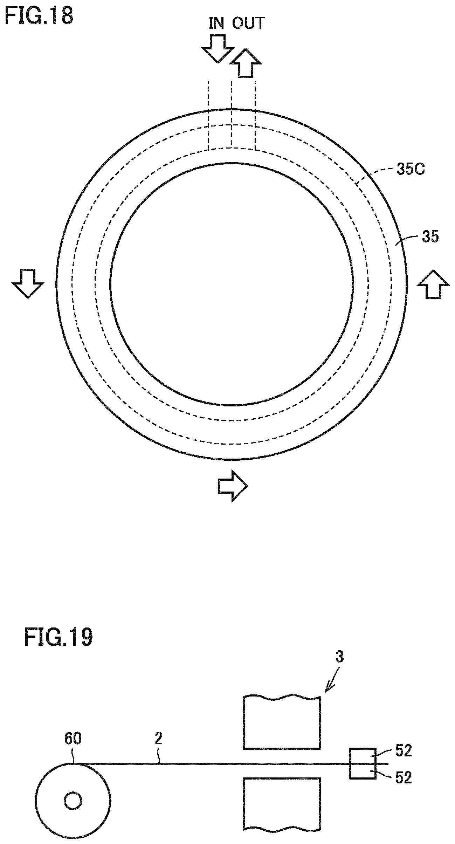

Fig. 18 shows pressing portion 35 in plan view. As indicated in Fig. 18 by a broken line, a water cooling circuit 35C serving as a passage for coolant water extends in pressing portion 35 circumferentially. In Fig. 18, how the coolant water flows is indicated by an arrow. By thus circulating the coolant water to cool pressing portion 35, when the pressing portion 35 is brought into contact with coiled material 2, coiled material 2 can rapidly be cooled (or die-quenched).

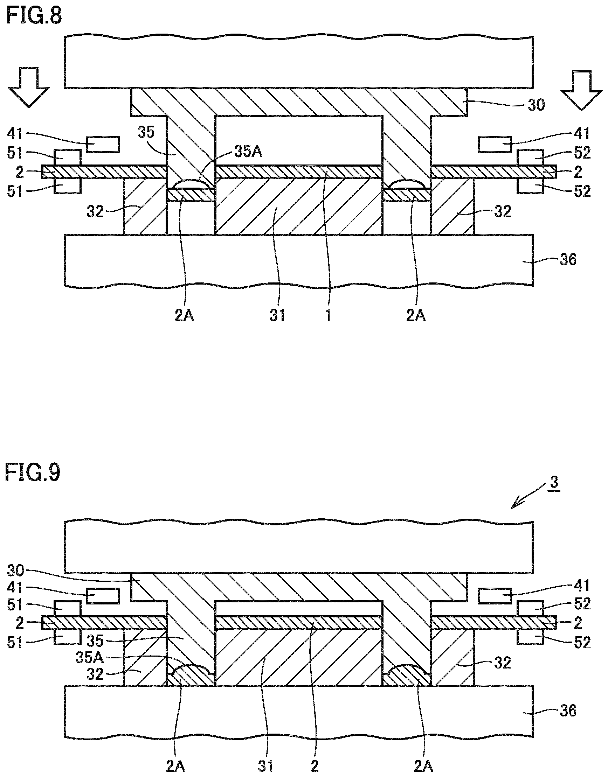

Referring to Fig. 6, forming dies 31, 32 as the second die are disposed so as to face pressing die 30 in the vertical direction. Forming die 31 has a cylindrical shape as shown in Fig. 6. Forming die 32 is in the form of a ring having a diameter larger than that of forming die 31. Forming die 32 is radially spaced from forming die 31 and thus disposed outside forming die 31. As shown in Fig. 8, when pressing die 30 is caused to stroke toward forming dies 31, 32, pressing portion 35 is located in a gap between forming dies 31 and 32.

The second die has a base 36 for example in the form a flat plate on a side of forming die 31, 32 facing away from pressing die 30 (i.e., a lower side in Fig. 6). A region of base 36 located in a gap between forming die 31 and 32 corresponds to a portion of the second die that punches coiled material 2, and base 36 in that region has a surface which is basically flat as well as that of the remaining portion of base 36. Note that when forming dies 31 and 32 have concave curved surface 35A, a portion of pressing die 30 facing curved surface 35A has a flat surface.

Heating unit 4 is for heating coiled material 2 to a target temperature equal to or higher than an A₁ transformation point, as will be described later. Heating unit 4 is provided to be capable of heating coiled material 2 by ohmic heating, and mainly includes a conduction terminal 41 for supplying a direct current to coiled material 2 and a stabilized direct current (DC) power supply 42 connected to conduction terminal 41. Heating unit 4 can heat coiled material 2 by passing a current through coiled material 2 from stabilized DC power supply 42 via conduction terminal 41. Conduction terminal 41 is located for example inwardly of a first clamp 51 and a second clamp 52 described later and can be brought into contact with coiled material 2 at a portion tensioned by first clamp 51 and second clamp 52. Stabilized DC power supply 42 preferably has a load regulation of 0.2% or less and a line regulation of 0.2% or less. Stabilized DC power supply 42 preferably has a sampling period of 10 ms or less. Note that load regulation is variation in voltage when a current of a load is changed while input is held constant, and it can be measured by measuring voltage when there is no load. Load regulation is represented as (E_{O} - E_{L})/E_{O} × 100%, where E_{O} represents voltage when there is no load and E_{L} represents a rated voltage for a rated load. Line regulation is variation of an output voltage when an input voltage is changed, and it can be measured by measuring of a voltage of a load. Line regulation is represented as (E_{R} - E_{M})/E_{M} × 100%, where E_{R} represents an output voltage for a rated power supply voltage and E_{M} represents an output voltage for an upper or lower limit of the rated power supply voltage. The sampling period is a reciprocal f [Hz] of an interval T [s] by sampling by A/D conversion.

Tensioning unit 5 is for applying tension to coiled material 2 in at least one direction along a surface of coiled material 2. Tensioning unit 5 mainly includes first clamp 51 and second clamp 52. First clamp 51 and second clamp 52 fix coiled material 2 punched by processing unit 3, and are provided to be capable of applying tension to coiled material 2. First clamp 51 and second clamp 52 are provided so as to be capable of changing between a state in which they vertically clamp coiled material 2 and a state in which they do not. While first clamp 51 and second clamp 52 may have any configuration, they may be hydraulic clamps or air clamps, for example.

First clamp 51 and second clamp 52 are provided at positions opposite to each other in a direction in which coiled material 2 extends, with pressing die 30 and forming dies 31, 32 posed therebetween. First clamp 51 is disposed on a side of supplying coiled material 2 in the above direction, and second clamp 52 is disposed on a side of discharging coiled material 2 in the above direction. In other words, coiled material 2 between a first portion clamped by first clamp 51 and a second portion clamped by second clamp 52 is at least partially located between pressing die 30 and forming dies 31, 32.

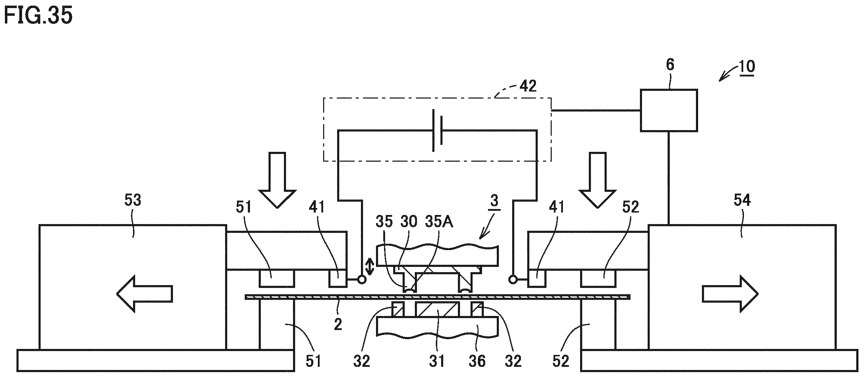

First clamp 51 and second clamp 52 are provided so as to be relatively movable in a direction in which they face each other (or the direction in which coiled material 2 extends). For example, first clamp 51 and second clamp 52 are hydraulic clamps, respectively, and include hydraulic cylinders (denoted by reference numerals 53, 54 in Fig. 35), respectively, and are provided to be movable by the hydraulic cylinders away from each other in the direction in which the clamps face each other. Thus first clamp 51 and second clamp 52 can apply tension to coiled material 2 disposed between pressing die 30 and forming dies 31, 32, in the direction in which coiled material 2 extends. In other words, first clamp 51 and second clamp 52 moved away relatively from each other in the direction in which they face each other apply tension to coiled material 2 between the first portion 51 clamped by first clamp 51 and the second portion clamped by second clamp 52.

First clamp 51 and second clamp 52 apply tension to coiled material 2 so as to increase a distance between the first portion and the second portion by an amount equal to or less than that by which coiled material 2 between the first and second portions thermally expands, for example, when coiled material 2 is heated to a target temperature described later. Herein, tension refers to a stress in the direction in which coiled material 2 extends. The amount by which coiled material 2 between the first and second portions thermally expands can be considered as the coefficient of thermal expansion of coiled material 2 (e.g., 10 × 10⁻⁵/°C) multiplied by a distance L mm between the first portion and the second portion multiplied by a variation in temperature ΔT°C of coiled material 2 after it is clamped. First clamp 51 and second clamp 52 are preferably provided so as to be capable of applying a tension greater than 0 MPa and less than 50 MPa, more preferably a tension greater than 0 MPa and 30 MPa or less, to coiled material 2. For example, first clamp 51 and second clamp 52 are provided so as to be capable of applying a tension of 10 MPa to coiled material 2. The tension applied to coiled material 2 can be measured for example by using a load cell before the material is set. Alternatively, the tension applied to coiled material 2 can be measured by attaching a load cell to a movable part of a clamping device.

Controller 6 is for controlling heating unit 4. Controller 6 is provided to be capable of controlling an output of heating unit 4 (a value of a current that stabilized DC power supply 42 supplies to coiled material 2 via conduction terminal 41). Controller 6 can decrease the output of heating unit 4 before coiled material 2 heated by heating unit 4 reaches a target temperature described later. Controller 6 may include a temperature measuring unit (not shown) for measuring the temperature of coiled material 2. In that case, controller 6 can decrease the output of heating unit 4 when the temperature of coiled material 2 measured by the temperature measuring unit reaches a predetermined temperature lower than the target temperature. Controller 6 decreases the output of heating unit 4 when coiled material 2 reaches a temperature of 80% or more to 95% or less of the target temperature, for example. Controller 6 may be provided to be capable of controlling processing unit 3. Controller 6 may be provided to be capable of controlling tensioning unit 5. Controller 6 may be provided so as to be capable of controlling the tension applied to coiled material 2 by tensioning unit 5 in accordance with the output of heating unit 4 or the temperature of coiled material 2 measured by the temperature measuring unit. Machine parts manufacturing apparatus 10 having the above configuration is prepared.

Subsequently, coiled material 2 is set in processing unit (S1). Specifically, coiled material 2 is clamped by first clamp 51 and second clamp 52 of processing unit 3 (S2). First clamp 51 and second clamp 52 receive pressure for holding coiled material 2.

Subsequently, coiled material 2 is tensioned (S3). Specifically, at least one of first clamp 51 and second clamp 52 is relatively moved away from the other in the direction in which coiled material 2 extends. Accordingly, a region of coiled material 2 located between a portion clamped by first clamp 51 and a portion clamped by second clamp 52 receives a tension depending on an amount of relative movement of first clamp 51 and second clamp 52 (an amount by which a distance between first clamp 51 and second clamp 52 change). Tension applied to coiled material 2 is greater than 0 MPa and less than 50 MPa, preferably greater than 0 MPa and 30 MPa or less. First clamp 51 and second clamp 52 have their relative positional relationship held at least until press-forming the material ends (S9). That is, the tension applied to coiled material 2 is held at least while the material is heated and press-formed.

Subsequently, ohmic heating is started (S4). More specifically, referring to Fig. 7, conduction terminal 41 is initially brought into contact with coiled material 2. Then, through conduction terminal 41 coiled material 2 receives a current. As coiled material 2 receives the current, coiled material 2 generates heat (Joule heat), which heats coiled material 2 (i.e., ohmic heating). In doing so, stabilized DC power supply 42 supplies coil material 2 with a current having a value I1 (see Fig. 3), which can be a value that can heat coiled material 2 to the target temperature in a short period of time. While the ohmic heating can be performed in any atmosphere, it can be performed for example in an atmosphere of the air (an atmosphere containing oxygen).

After the ohmic heating is started, before coiled material 2 reaches the target temperature, the output of heating unit 4 is decreased (S5). Preferably, when coiled material 2 reaches a temperature of 80% or higher and 95% or lower of the target temperature, controller 6 decreases the value of the current supplied by stabilized DC power supply 42 to coiled material 2. The current is reduced to a value I2 (see Fig. 3) which can be a value that allows coiled material 2 to be heated to the target temperature and held at the target temperature, and is controlled by controller 6. Supplying a current having value 12 to coiled material 2 allows coiled material 2 to reach the target temperature and also be held at the target temperature for a determined period of time (S6). The value of the current supplied to coiled material 2 while coiled material 2 is held at the target temperature may be varied, and it is controlled for example to be decreased stepwise as shown in Fig. 3. In this manner, the ohmic heating of coiled material 2 is completed (S7).

Coiled material 2 is heated to a temperature (a target temperature), which is equal to or higher than the temperature of the A₁ transformation point of steel composing coiled material 2, and it is for example 1000°C. "A₁ transformation point" refers to a point corresponding to a temperature at which heated steel has a structure starting transformation from ferrite to austenite. Accordingly, the above ohmic heating transforms the structure of the steel composing coiled material 2 into austenite. Furthermore, the output of heating unit 4 is decreased at a temperature T1, which is preferably a temperature of 80% to 95% of the target temperature of coiled material 2, and for example when the target temperature is 1000°C, temperature T1 is preferably 800°C to 950°C. It is also preferable that an overshoot of the temperature heating coiled material 2 by heating unit 4 be suppressed within 1% of the target temperature.

The output of heating unit 4 since the ohmic heating was started until it ends may be controlled through feedback. For example, machine parts manufacturing apparatus 10 may comprise a temperature measuring unit capable of measuring the temperature of coiled material 2, and the output of heating unit 4 since the ohmic heating was started until it ends may be controlled through feedback based on the temperature of coiled material 2 measured by the temperature measuring unit. Preferably, the output of heating unit 4 since the ohmic heating was started until it ends is preferably controlled in an output pattern previously set depending on the workpiece, or coiled material 2. For example, it is preferable that value I1 of a current supplied to coiled material 2 since electrical conduction was started, a time at which coiled material 2 receiving the current having value I1 reaches 80% to 95% of the target temperature, value I2 of a current capable of suppressing a temperature overshoot to 1% or less of the target temperature, a time at which coiled material 2 receiving the current having value I2 reaches the target temperature, and a period of time for which coiled material 2 is held at the target temperature be previously obtained, and set as a pattern of an output of heating unit 4. When the method for manufacturing a bearing washer according to the present embodiment is compared with a case implemented through feedback control, the former can reduce a production time by a period of time involved in feedback control (for example several milliseconds to several tens of milliseconds) and can thus achieve high throughput.

Subsequently, press-forming coiled material 2 is started (S8). Specifically, with reference to Fig. 8, pressing die 30 strokes toward forming dies 31, 32. Thus, as shown in Fig. 8, pressing portion 35 is brought into contact with coiled material 2 and thus punches a portion of coiled material 2 in the form of a ring in the direction of the thickness of coiled material 2 (S9). In this way, a ring-shaped formed body 2A is obtained.

Subsequently, with reference to Fig. 9, pressing die 30 is caused to further stroke toward forming dies 31, 32 so that an uppermost portion of formed body 2A comes into contact with curved surface 35A of pressing portion 35 of pressing die 30. Pressing die 30 is caused to continuously stroke to reach the bottom dead center (S10).

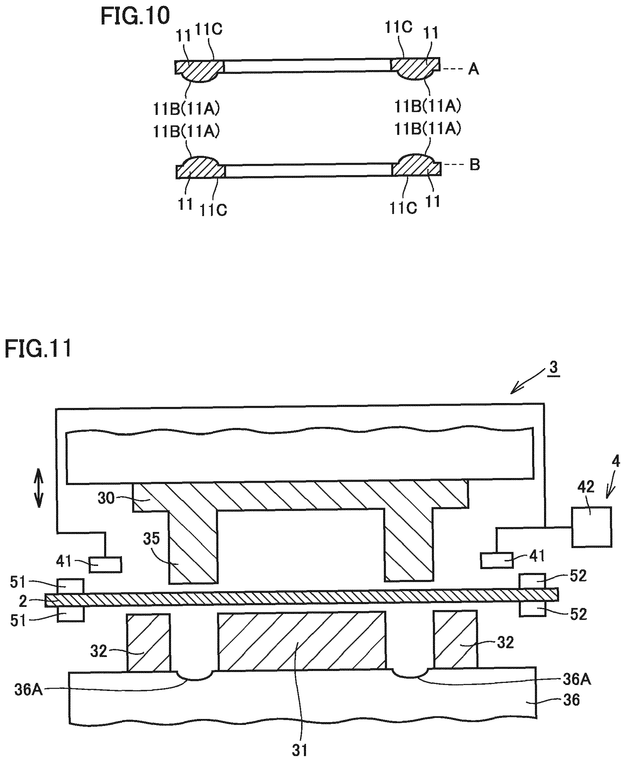

Thus, formed body 2A is formed to have a desired shape. That is, referring to Fig. 10, punched formed body 2A is formed as bearing washer 11 in the form of a ring. Bearing washer 11 has one major surface or bearing washer raceway surface 11A formed to have a convex surface 11B, and a major surface opposite to convex surface 11B and formed as a flat surface 11C. This is because convex surface 11B is formed by curved surface 35A of pressing die 30 serving as the first die, whereas flat surface 11C is formed by flat base 36 of forming dies 31, 32 serving as the second die.

Referring again to Fig. 9, punched formed body 2A is held in contact with processing unit 3 (i.e., pressing die 30, forming die 31 and base 36) for a determined period of time. Simultaneously, coolant water is supplied to water cooling circuit 35C located inside pressing die 30, as has been set forth above (Fig. 18). As a result, formed body 2A is rapidly cooled to a temperature equal to or lower than an Ms point, and thus quenched. The "Ms point (martensitic transformation point)" is a point corresponding to a temperature at which austenitized steel cooled starts martensitization. As a result, the structure of the steel composing formed body 2A transforms into martensite. In this way, formed body 2A is quenched (die-quenched) (S11). Finally, the pressure supplied to first clamp 51 and second clamp 52 to clamp coiled material 2 is removed (S12), and a punched scrap of coiled material 2 and quenched formed body 2A are removed from processing unit 3. When doing so, by alleviating a clamping force between first clamp 51 and second clamp 52, the tension applied to coiled material 2 is relaxed (S12). By the process as described above, bearing washer 11 is manufactured, and the method for manufacturing a bearing washer according to the present embodiment is completed.

Referring again to Fig. 10, processed bearing washer 11 is disposed to have convex surface 11B in contact with needle roller 12 shown in Fig. 1. Accordingly, bearing washer 11 in upper region A shown in Fig. 1 has a lower surface brought into contact with needle roller 12, and accordingly, it is disposed such that flat surface 11C faces upward and convex surface 11B faces downward. Furthermore, bearing washer 11 in lower region B shown in Fig. 1 has an upper surface brought into contact with needle roller 12, and accordingly, it is disposed such that flat surface 11C faces downward and convex surface 11B faces upward.

Hereinafter, with reference to Fig. 11, a second example in configuration of processing unit 3 will be described. With reference to Fig. 11, processing unit 3 basically has the same configuration as the first example of processing unit 3 shown in Fig. 6, except that the former is different from processing unit 3 shown in Fig. 6 in that forming dies 31, 32 are disposed as the first die and pressing die 30 is disposed as the second die. That is, a concave curved surface 36A as a portion of the first die for punching coiled material 2 is formed on a surface of base 36 located in the gap between forming dies 31 and 32. In contrast, a lowermost surface of pressing portion 35 as a portion of pressing die 30 as the second die for punching coiled material 2 is a flat surface. In this way, in the present embodiment, either one of pressing die 30 (including pressing portion 35) and forming dies 31, 32 (including base 36) may be used as the first die, and either one of pressing die 30 and forming dies 31, 32 may be used as the second die. Even when processing unit 3 of Fig. 11 is used, bearing wear 11 is manufactured in a method basically the same as a case with the Fig. 6 processing unit 3 used, and can be processed in accordance with the flowchart of Fig. 2.

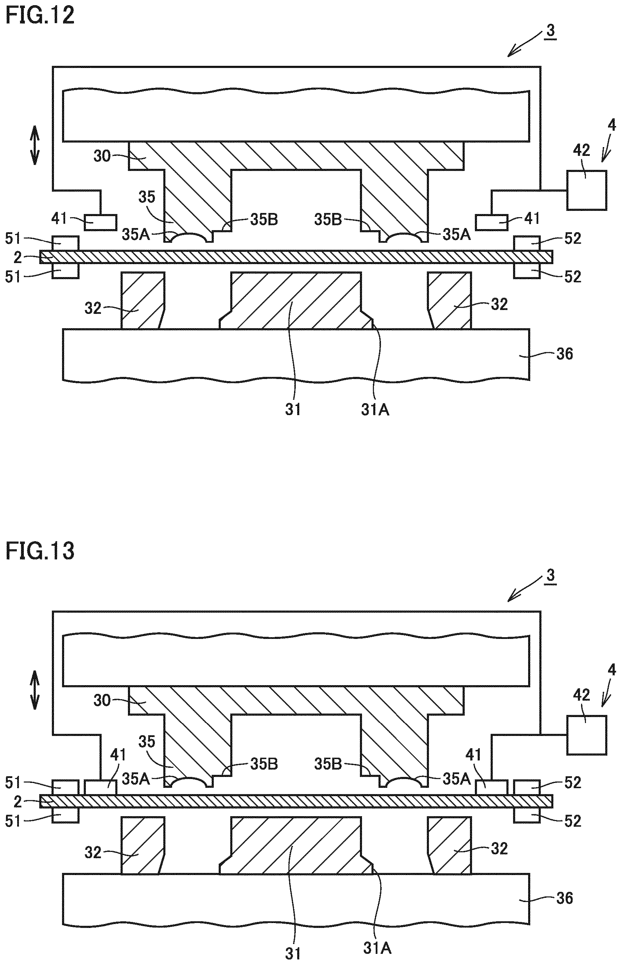

Hereinafter, with reference to Fig. 12, a third example in configuration of processing unit 3 will be described. Referring to Fig. 11, this processing unit 3 is basically similar in configuration to the first example of processing unit 3 shown in Fig. 6, except that the first die or pressing die 30 includes pressing portion 35 having a lower portion, that is, a portion punching coiled material 2, provided with concave curved surface 35A and in addition has a cutout portion 35B formed by cutting out a portion of a lowermost portion. Cutout portion 35B is formed by cutting out pressing portion 35 at a lowermost portion located on curved surface 35A on a radially inner side. Further, forming die 31 has a cylindrical shape as shown in Fig. 12, with a circumferential portion having a radially outward protrusion 31A. In this respect, processing unit 3 of Fig. 12 is different from processing unit 3 of Fig. 6.

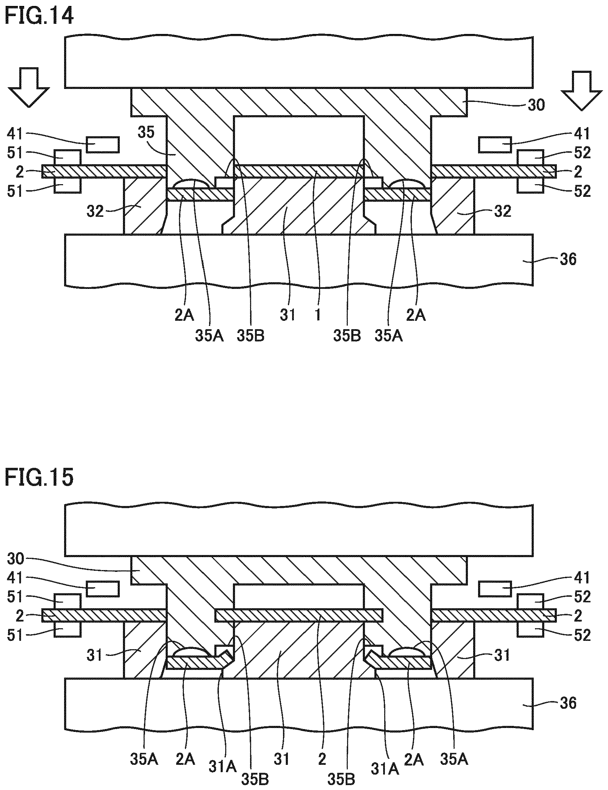

In the method for manufacturing bearing washer 11 by using processing unit 3 of Fig. 12, the step of Fig. 12 corresponds to the step of Fig. 6, the step of Fig. 13 corresponds to the step of Fig. 7, and the step of Fig. 14 corresponds to the step of Fig. 8, and accordingly, they will not be described in detail.

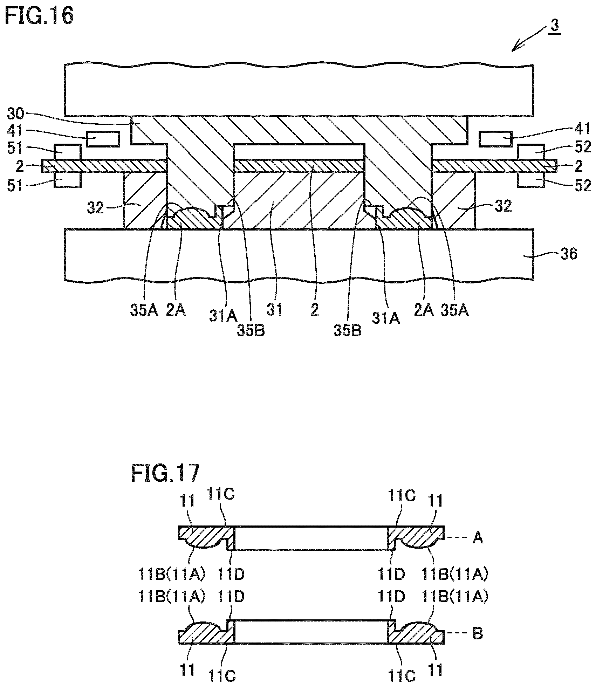

Referring to Fig. 15, when processing unit 3 of Fig. 12 is used, a forming step is further performed. That is, as well as the step of Fig. 9, pressing die 30 is caused to further stroke toward forming dies 31, 32 to bring an inward peripheral portion of formed body 2A into contact with protrusion 31A of forming die 31. Pressing die 30 is caused to continuously stroke to reach the bottom dead center (S10). Thus, with reference to Fig. 16, formed body 2A has the inward peripheral portion bent to be directed in the direction of the thickness of formed body 2A. The step of bending formed body 2A in this manner is herein referred to as a "forming step." Furthermore, as well as in Fig. 9, a portion of the uppermost portion of formed body 2A comes into contact with curved surface 35A of pressing portion 35 of pressing die 30. In this way, before a quenching treatment, ring-shaped formed body 2A is subjected to a forming step in processing unit 3.

Subsequently, with reference to Fig. 16, similarly as done in the step of Fig. 9, formed body 2A is held in contact with processing unit 3 (i.e., pressing die 30, forming die 31 and base 36) for a determined period of time. Simultaneously, coolant water is supplied to water cooling circuit 35C located inside pressing die 30, as has been set forth above (Fig. 18). As a result, formed body 2A is rapidly cooled to a temperature equal to or lower than the Ms point, and thus quenched. Thereafter, as well as the manufacturing method in processing unit 3 of the first example, the method for manufacturing a bearing washer is completed.

Referring to Fig. 17, after the process shown in Figs. 12 to 16, bearing washer 11 has convex surface 11B formed by curved surface 35A and in addition has a bent portion 11D aligned with convex surface 11B inwardly of convex surface 11B and bent upward in the direction of the thickness of formed body 2A. In contrast, the major surface opposite to the major surface having convex surface 11B and bent portion 11D is flat surface 11C formed by the flat surface of base 36.

Furthermore, as well as Fig. 10, Fig. 17 also shows that, as bearing washer 11 in upper region A shown in Fig. 1 has a lower surface brought into contact with needle roller 12, it is disposed such that flat surface 11C faces upward and convex surface 11B and bent portion 11D face downward. Furthermore, as bearing washer 11 in lower region B shown in Fig. 1 has an upper surface brought into contact with needle roller 12, it is disposed such that flat surface 11C faces downward and convex surface 11B and bent portion 11D face upward.

Note that although not shown, to the third example of processing unit 3 shown in Fig. 12, a configuration may be applied in which the base 36 side has the first die, i.e., concave curved surface 36A (see Fig. 11) and a cutout portion (see cutout portion 35B shown in Fig. 12), and the pressing portion 35 side may be arranged as the second die having a flat surface.

Note that when coiled material 2 undergoes the heat treatment in the air, the method for manufacturing a bearing washer according to the present embodiment preferably comprises after the step of heating, punching and quenching the steel material the step of removing an oxide film (oxide scale) formed on a surface of bearing washer (or formed body) 11. While the oxide film may be removed in any method, directing at bearing washer 11 hard particles made of steel or the like, or shot blasting, may be performed.

The method for manufacturing a bearing washer according to the present embodiment is not limited to the above configuration.

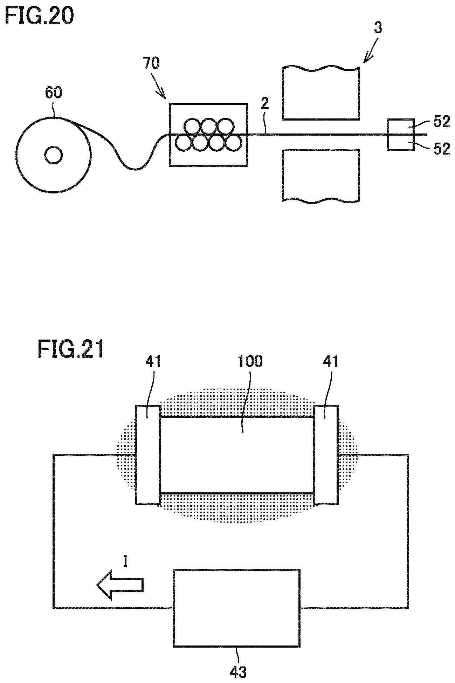

A method for applying tension to coiled material 2 is not limited to a method using first clamp 51 and second clamp 52 provided near pressing die 30 and forming dies 31, 32 of processing unit 3. For example, instead of first clamp 51 in Fig. 6, as shown in Fig. 19, a supply unit 60 (an uncoiler) provided to be capable of supplying coiled material 2 to processing unit 3 may be used, or as shown in Fig. 20, a correction unit 70 (an leveler) may be used which is provided to be capable of correcting distortion of coiled material 2 supplied from supply unit 60 to processing unit 3. Driving at least one of the unit and second clamp 52 can apply tension to coiled material 2 located between the unit and second clamp 52.

For example, causing supply unit 60 to perform a rewinding operation can apply tension to coiled material 2 held by supply unit 60 and second clamp 52 between two points in the direction in which coiled material 2 extends. Further, moving second clamp 52 away from correction unit 70 in the direction in which coiled material 2 extends can apply tension to coiled material 2 held by correction unit 70 and second clamp 52 between two points in the direction in which coiled material 2 extends.

The method for heating coiled material 2 is not limited to ohmic heating using a direct current, and it may be at least one selected from the group consisting of ohmic heating using an alternating current, indirect resistor heating, induction heating, contact heat transfer, and far-infrared heating. Each heating method will more specifically be described below.

Referring to Fig. 21, in ohmic heating, a current is directly passed through an object to be heated 100 (or coiled material 2) to generate Joule heat to thus heat the object to be heated 100. Ohmic heating using a direct current is done as has been described above, whereas ohmic heating using an alternating current is done as follows: an alternating current is supplied from an AC power supply to coiled material 2 via conduction terminal 41 to generate Joule heat to thereby heat coiled material 2.

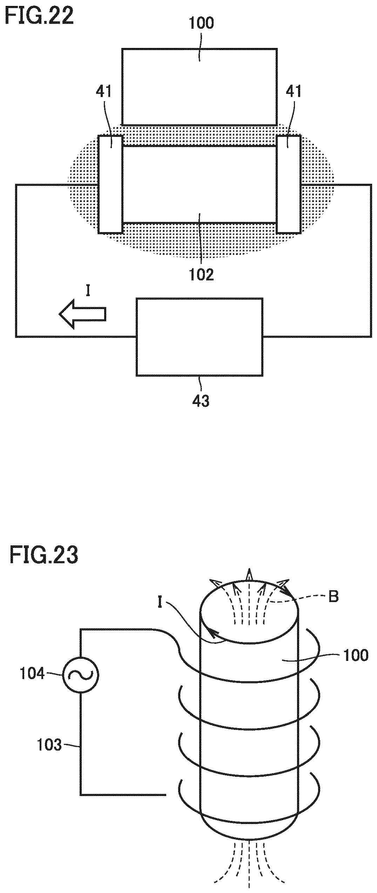

Referring to Fig. 22, in indirect resistor heating, a current is passed through a heating element 102 having a prescribed resistance to generate Joule heat to thereby indirectly heat the object to be heated 100 disposed near heating element 102. Heating element 102 may be supplied with a direct current or may be supplied with an alternating current.

Referring to Fig. 23, in induction heating, an alternating current is supplied from AC power supply 104 to coil 103, whereby an alternating magnetic flux B is generated through the object to be heated 100. In addition, in the object to be heated 100, an eddy current I is generated in a direction to cancel alternating magnetic flux B. Then, the object to be heated 100 is heated by the heat generated by eddy current I and a resistance R of the object to be heated 100.

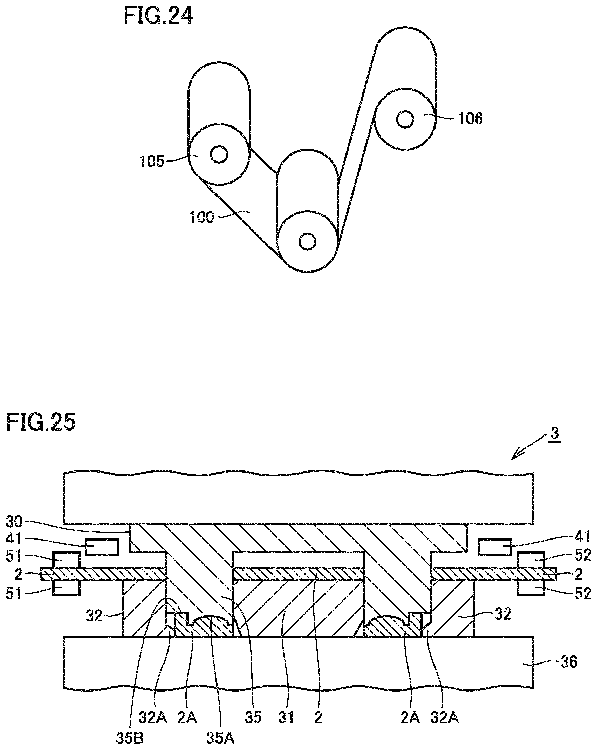

Referring to Fig. 24, in contact heat transfer, the object to be heated 100 is heated by heat transferred from an internal heating roll 105 and an external heating roll 106. In far-infrared heating, the object to be heated is exposed to far-infrared rays and thus receives far-infrared energy. This activates vibration between atoms constituting the object to be heated and thus heats the object to be heated.

Further, while the method for manufacturing a bearing washer according to the present embodiment bends an inward peripheral portion of formed body 2A in the direction of the thickness of formed body 2A, as shown in Fig. 15, to apply a forming step to formed body 2A in processing unit 3, the method is not limited thereto. With reference to a fourth example in configuration of processing unit 3 shown in Fig. 25, ring-shaped formed body 2A may have an outward peripheral portion (rather than the inward peripheral portion) subjected to a forming step. In that case, forming die 32 has an inward peripheral surface with a protrusion 32A protruding radially inward. Therefore, when stroking of pressing die 30 is done similarly as in the case of the above embodiment, ring-shaped formed body 2A has an outward peripheral portion in contact with the protrusion 32A. Then, similarly as in the case of the above embodiment, pressing die 30 is caused to stroke until it reaches the bottom dead center. Thus, as shown in Fig. 25, formed body 2A has the outward peripheral portion bent to be directed in the direction of the thickness of formed body 2A. This can also subject formed body 2A to a forming step in processing unit 3 before a quenching treatment, and can achieve the same effect as the above embodiment.

Further, first clamp 51 and second clamp 52 may each have members vertically clamping and thus holding coiled material 2 with one member also serving as conduction terminal 41. In that case, first clamp 51 and second clamp 52 have the other member opposite to one member with coiled material 2 therebetween, and incapable of conduction with one member. This allows processing unit 3 to have a simplified configuration.

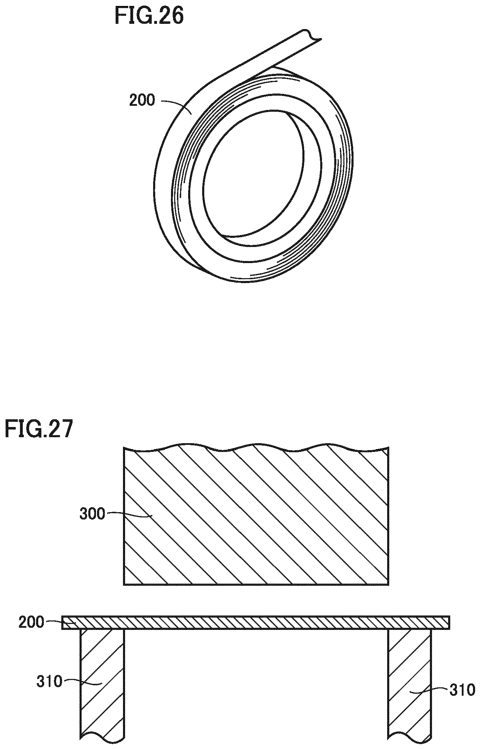

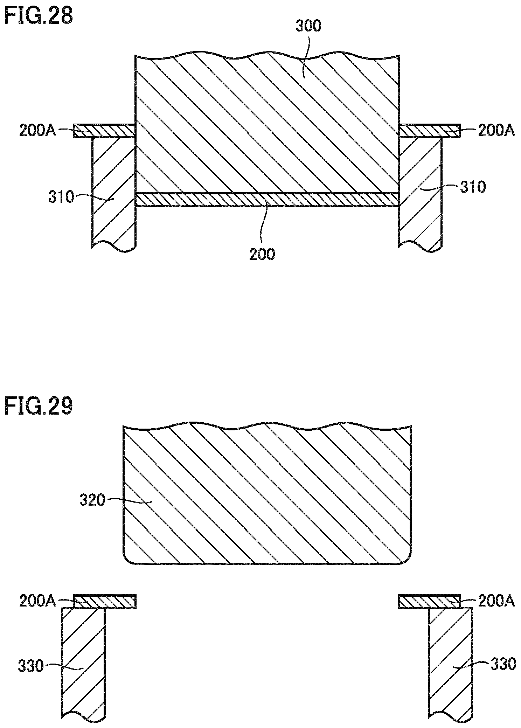

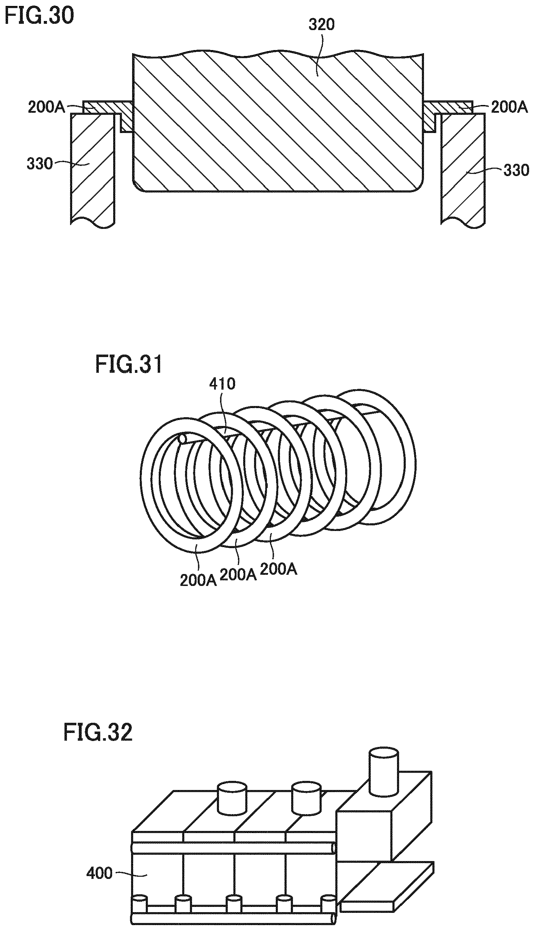

A function and effect of the method for manufacturing a bearing washer according to the present embodiment will be described with reference to a comparative example. Initially, a method for manufacturing a bearing washer according to the comparative example will be described with reference to Figs. 26 to 34. Initially, referring to Fig. 26, a rolled thin plate shaped steel material is coiled to prepare a coiled material 200. Subsequently, with reference to Figs. 27 and 28, coiled material 200 is placed on a die 310, and a die 300 is caused to stroke toward die 310 to punch coiled material 200. In this way, a ring-shaped formed body 200A is obtained. Subsequently, with reference to Figs. 29 and 30, formed body 200A is placed on a die 330, and a die 320 is caused to stroke toward die 330 to subject an inward peripheral portion of formed body 200A to a forming step.

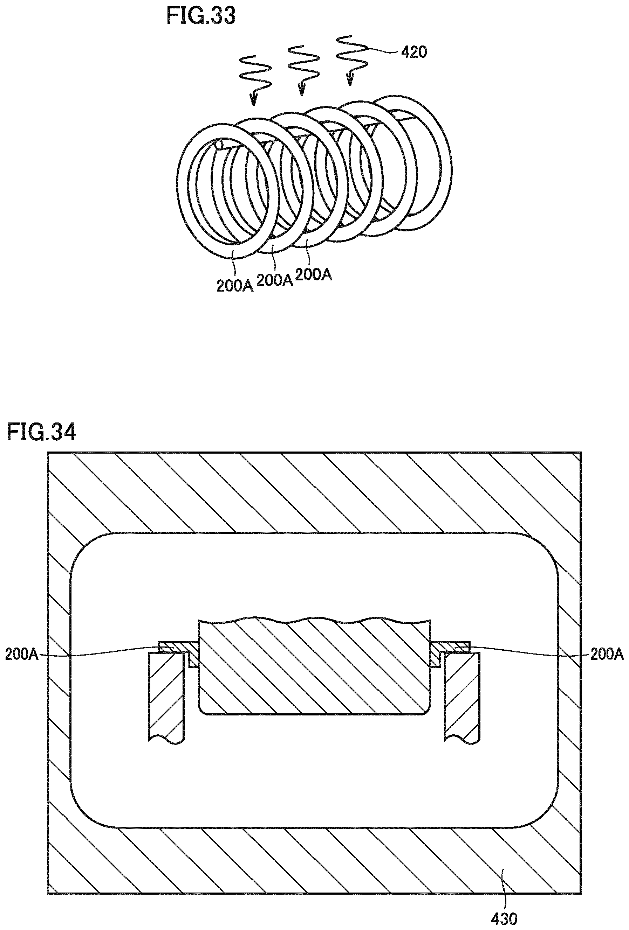

Subsequently, with reference to Fig. 31, in a setup step before a heat treatment, a plurality of formed bodies 200A are hung on a bar 410 and thus aligned. Thereafter, with reference to Figs. 31 and 32, these formed bodies 200A are introduced into a carburizing furnace 400 and thus carburized. Subsequently, referring to Fig. 33, after formed bodies 200A are carburized, blast 420 is applied to and thus cool formed bodies 200A to thus quench formed bodies 200A. Finally, with reference to Fig. 34, in a tempering furnace 430, quenched formed body 200A is press-tempered. Thus the method for manufacturing a bearing washer according to the comparative example includes many steps and thus increases the cost for manufacturing the bearing washer.

In contrast, the method for manufacturing a bearing washer according to the present embodiment allows coiled material 2 to undergo a heating step, a punching step, a forming step, and a quenching step all performed in machine parts manufacturing apparatus 10 through a single process. When this is compared with a case in which the steps are separately performed, as done in the method for manufacturing a bearing washer according to the comparative example, the former allows a shorter manufacturing process. This allows a bearing washer to be manufactured at a further reduced cost and hence more inexpensively.

Furthermore, in the method for manufacturing a bearing washer according to the present embodiment at the step of heating and punching the steel material, coiled material 2 is heated and punched while coiled material 2 is tensioned in at least one direction along a surface of coiled material 2. When this is compared with heating and punching a steel material without applying tension thereto to obtain a bearing washer, the former allows a resultant bearing washer to have better quality through the process.

Specifically, when the steel material is heated in the forming unit to a temperature equal to or higher than the A₁ transformation point without the above tension applied to the steel material, the steel material is deformed as it is heated. In particular, a thrust needle roller bearing has a bearing washer having a small thickness and hence deformable when it is heated. When the steel material is thus deformed, there is a possibility that the deformed portion comes into contact with a part of processing unit 3 (a press) (e.g., forming die 32). When the deformed portion thus comes into contact with a part of processing unit 3, the heat imparted to the steel material is dissipated from the portion in contact with processing unit 3 to the forming unit, so that the steel material (in particular, a portion to be processed, e.g., a portion between portions held by the two clamps) has a thermal distribution and may have a portion which is not heated to a temperature equal to or higher than the A₁ transformation point. As a result, a bearing washer which is obtained by heating a steel material in the forming unit to a temperature equal to or higher than the A₁ transformation point without the above tension applied to the steel material, and furthermore, punching and quenching the heated steel material, may not be processed to have sufficient quality as the steel is deformed, as described above, and thus insufficiently heated. Furthermore, when the steel material is punched in the forming unit without the above tension applied to the steel material, the steel material will be punched in a deformed state caused as the steel material is heated, and as a result, the steel material is punched less precisely.

In contrast, in the method for manufacturing a bearing washer according to the present embodiment at the step of heating and punching the steel material, coiled material 2 is heated while coiled material 2 is tensioned in at least one direction along a surface of coiled material 2, which can reduce or prevent deformation of coiled material 2 caused as it is heated. This can prevent coiled material 2 from coming into contact with processing unit 3 and hence suppress heat dissipation from coiled material 2 to processing unit 3 via a portion of coiled material 2, and coiled material 2 can thus have the portion to be processed, as described above, entirely heated to a temperature equal to or higher than the A₁ transformation point. Further, coiled material 2 less deformed or free from deformation is punched. As a result, bearing washer 11 manufactured in the method for manufacturing a bearing washer according to the present embodiment is punched with less impaired precision and thus processed with high precision. Further, bearing washer 11 has less varying quality through processing.

Furthermore, the present inventors have found that a bearing washer manufactured has a surface roughness varying with a relationship between a tension applied to coiled material 2 and an amount by which a distance between the first and second portions of coiled material 2 thermally expands in the step of heating and punching the steel material. The tension applied to coiled material 2 between the first and second portions in the step of heating and punching the steel material is applied to increase a distance between the first and second portions of coiled material 2 by a length corresponding to an amount by which the distance between the first and second portions thermally expands as coiled material 2 is heated to the above temperature in the step of heating and punching the steel material. The present inventors have confirmed that a bearing washer manufactured with such a small tension applied to coiled material 2, as described above, has a smaller surface roughness than a bearing washer similarly manufactured although a large tension which increases the distance between the first and second portions to be larger than the above amount of thermal expansion is applied to coiled material 2 (details will be described later). That is, when the method for manufacturing a bearing washer according to the present embodiment is compared with heating and punching coiled material 2 while applying thereto a large tension allowing deformation larger than the amount of thermal expansion, the former allows a resultant bearing washer to have a surface with better quality.

Preferably, the tension is applied to increase the distance between the first and second portions of coiled material 2 by an amount by which the distance between the first and second portions of coiled material 2 thermally expands as coiled material 2 is heated to a temperature equal to or higher than the A₁ transformation point. Such a method for manufacturing a bearing washer allows bearing washer 11 to be punched with maximally improved precision and simultaneously allows bearing washer 11 to have a surface with maximally improved quality, and can thus manufacture bearing washer 11 which is inexpensive and has high quality through processing.

The tension is preferably greater than 0 MPa and less than 50 MPa. As shown in Fig. 3, by applying such a tension to coiled material 2 constantly until the tension is removed, the distance between the first and second portions of coiled material 2 can be increased by an amount equal to or smaller than that by which the distance between the first and second portions of coiled material 2 thermally expands as coiled material 2 is heated to a temperature equal to or higher than the A₁ transformation point. As a result, bearing washer 11 as described above can be easily manufactured.

In the method for manufacturing a bearing washer at the step of heating and punching the steel material, tension is applied to coiled material 2 by using: at least one of supply unit 60 provided to be capable of supplying coil material 2 to processing unit 3, correction unit 70 provided to be capable of correcting distortion of a steel material supplied from supply unit 60 to processing unit 3, and first clamp 51 provided to be capable of holding a portion of coil material 2; and second clamp 52 located on a side opposite to one of supply unit 60, correction unit 70 and first clamp 51 with respect to processing unit 3 and provided to be capable of holding another portion of coil material 2. At least one of supply unit 60, correction unit 70 and first clamp 51, and second clamp 52, each holding coiled material 2, can be moved relatively away from each other to apply tension to coiled material 2 heated and punched in processing unit 3. Bearing washer 11 which is inexpensive and has high quality though processing can thus be obtained.

Subsequently, in the method for manufacturing a bearing washer, processing unit 3 as a forming unit includes a first die, for example pressing die 30, for punching coiled material 2, and a second die opposite thereto or forming dies 31, 32. Then, as shown in Figs. 6-9 and 12-16, pressing portion 35 of pressing die 30 has concave curved surface 35A, and a portion on the forming die 31 and 32 side at base 36 to punch coiled material 2 has a flat surface. Therefore bearing washer 11 sandwiched between curved surface 35A of processing unit 3 and the flat surface of base 36 of processing unit 3 and thus punched will have one surface having a convex curved surface like convex surface 11B shown in Fig. 10, and the other surface having a flat surface like flat surface 11C shown in Fig 10. This is because bearing washer 11 has one surface formed as the concave shape of curved surface 35A of pressing portion 35 is transferred thereto, and bearing washer 11 has the other surface formed as the flat surface of base 36 is transferred thereto.

Convex surface 11B can be less probable to cause edge loading and differential slip with needle roller 12 in contact therewith. This can reduce damage caused by edge loading, and heat generated by differential slip. In particular, edge loading is a problem caused as bearing washer 11 and needle roller 12 contact along a very flat linear surface and an end portion of the surface thus becomes sensitive to sharing external force. Edge loading can be suppressed by forming convex surface 11B to make a surface thereof in contact with needle roller 12 a curved surface. Furthermore, suppressing edge loading can suppress mutually opposite slipping movements caused at portions of surfaces between a rolling rolling element and bearing washers sandwiching the rolling element, or differential slip. The thrust needle bearing can thus be operated more stably and have an increased lifetime.

Further, the other surface that is flat surface 11C allows the thrust needle bearing as a whole to have a flat outermost surface and hence be stably placed and stored.

In the method for manufacturing a bearing washer, coiled material 2 may contain 0.4% by mass or more of carbon. Coiled material 2 may have a thickness of 2 mm or less. Further, coiled material 2 may be punched in the form of a ring in the direction of its thickness. This allows bearing washer 11 having large hardness after a quenching treatment to be manufactured. Furthermore, such a relatively thin coiled material 2 is easily punched and can also sufficiently be quenched.

In the method for manufacturing a bearing washer as described above, coiled material 2 may be heated in at least any one method selected from the group consisting of ohmic heating, indirect resistor heating, induction heating, contact heat transfer, and far-infrared heating. Thus in the method for manufacturing a bearing washer as described above any heating method can be used to heat coiled material 2.

In ohmic heating, coiled material 2 may be heated by heat generated by supplying a direct current or an alternating current to coiled material 2. Thus, ohmic heating can be done using any of direct current and alternating current.

In the method for manufacturing a bearing washer as described above, bearing washer 11 having a hardness of 700 HV or more may be obtained. Thus, in the method for manufacturing a bearing washer, by shortening a manufacturing process and subjecting coiled material 2 to a sufficient quenching treatment, bearing washer 11 having large hardness after the quenching treatment can be manufactured.

In the method for manufacturing a bearing washer as described above, before the quenching treatment, a ring-shaped steel material (ring-shaped formed body 2A) may be subjected to a forming step in processing unit 3. In the forming step, ring-shaped steel material 2A may have an inward or outward peripheral portion bent to be directed in the direction of the thickness of ring-shaped steel material 2A. Thus coiled material 2 can undergo a heating step, a punching step, a forming step, and a quenching step all performed in machine parts manufacturing apparatus 10 through a single process. This allows bearing washer 11 to be manufactured through a further shortened process. Further, bearing washer 11 for a thrust bearing can be manufactured which has a ring shape with an inward or outward peripheral portion bent in the direction of its thickness.

In the method for manufacturing a bearing washer at the step of heating and punching the steel material, coiled material 2 may be heated in an oxygen-containing atmosphere, and after the step of heating, punching and quenching the steel material to obtain bearing washer 11, the step of removing an oxide film formed on a surface of bearing washer 11 may be included. After the step of removing the oxide film, bearing washer 11 has a surface roughness Ra of 0.15 µm or less. That is, according to the method for manufacturing a bearing washer according to the present embodiment, bearing washer 11 having a small surface roughness and high processing precision can be manufactured in an atmosphere of the air at low cost.

Furthermore, when the method for manufacturing a bearing washer according to the present embodiment that employs machine parts manufacturing apparatus 10 as described above allows bearing washer 11 to be manufactured in a shorter period of time than a conventional method for manufacturing a bearing washer by using such a conventional machine parts manufacturing apparatus as shown in Figs. 26 to 34.

More specifically, machine parts manufacturing apparatus 10 comprises: heating unit 4 configured to heat coiled material 2 by ohmic heating to a target temperature equal to or higher than an A₁ transformation point; tensioning unit 5 formed to be capable of applying tension to coiled material 2 in at least one direction along a surface of coiled material 2; processing unit 3 configured to punch a portion of coiled material 2 heated by heating unit 4 and tensioned by tensioning unit 5 and also rapidly cool and thus quench the punched portion of coiled material 2; and controller 6 configured to control a heating temperature applied by heating unit 4. Controller 6 reduces an output of heating unit 4 before coiled material 2 reaches the target temperature.

Machine parts manufacturing apparatus 10 as described above can increase the output of heating unit 4 (or a value of a current) to rapidly heat coiled material 2 to the target temperature. Furthermore, when heating unit 4 having an output reduced as controlled by controller 6 before coiled material 2 reaches the target temperature is compared with heating unit 4 having an output reduced after coiled material 2 reaches the target temperature, as in conventional die-quenching, the former can suppress more an overshoot of the temperature of coiled material 2 after the temperature of coiled material 2 reaches the target temperature than the latter. Thus when machine parts manufacturing apparatus 10 is compared with a machine parts manufacturing apparatus used in conventional die-quenching, the former allows a bearing washer manufacturing method to have a shorter period of time after ohmic heating is started before it is completed than the latter, and allows bearing washer 11 to be manufactured in a shorter period of time than latter. That is, machine parts manufacturing apparatus 10 allows the bearing washer manufacturing method to achieve high throughput. Further, tensioning unit 5 that can apply tension to coiled material 2 disposed between pressing die 30 and forming dies 31, 32 allows bearing washer 11 to have high processing quality, as described above.

In machine parts manufacturing apparatus 10, heating unit 4 preferably includes stabilized DC power supply 42. This allows controller 6 to control a value of a direct current supplied from heating unit 4 to coiled material 2 with high accuracy. Machine parts manufacturing apparatus 10 as described above can effectively suppress an overshoot of the temperature of coiled material 2 after the temperature of coiled material 2 reaches the target temperature.

Stabilized DC power supply 42 preferably has a load regulation of 0.2% or less and a line regulation of 0.2% or less. Such a stabilized DC power supply 42 has an output voltage with variation sufficiently suppressed relative to variation of an input voltage and a load current, and can sufficiently suppress variation of a value of a current supplied to coiled material 2. As a result, machine parts manufacturing apparatus 10 having such a stabilized DC power supply 42 can more effectively suppress an overshoot of the temperature of coiled material 2 after the temperature of coiled material 2 reaches the target temperature.

Stabilized DC power supply 42 preferably has a sampling period of 10 ms or less. As a result, stabilized DC power supply 42 can sample variation of output voltage with a period of 10 ms or less. Controller 6 can control a value of a direct current supplied from heating unit 4 to coiled material 2 with high accuracy based on data sampled by stabilized DC power supply 42.

Controller 6 is preferably provided to decrease the output of heating unit 4 when coiled material 2 reaches a temperature of 80% or more to 95% or less of the target temperature. As a result, controller 6 can more effectively suppress an overshoot of the temperature of coiled material 2 after the temperature of coiled material 2 reaches the target temperature. As a result, the overshoot of the temperature of coiled material 2 heated by heating unit 4 can be within 1% of the target temperature. Using such a machine parts manufacturing apparatus 10 allows bearing washer 11 to be manufactured in a shorter period of time than the conventional bearing washer manufacturing method as described above.

### Example 1

It has been confirmed that bearing washer 11 manufactured in the method for manufacturing a bearing washer according to the present embodiment has a high processing quality through the following evaluation. This will be described below with reference to Figs. 35 to 38.

Specifically, the bearing washer manufacturing method according to the present embodiment was carried out using coiled material 2 made of steel material of SAE 1070 and machine parts manufacturing apparatus 10 shown in Fig. 35. Machine parts manufacturing apparatus 10 shown in Fig. 35 was configured such that first clamp 51 and one conduction terminal 41 were connected to one cylinder 53 and second clamp 52 and the other conduction terminal 41 were connected to another cylinder 54. Further, first clamp 51 and second clamp 52 each had members cooperating to clamp coiled material 2 in the vertical direction and thus hold coiled material 2, and one of the members and conduction terminal 41 were able to be simultaneously brought into contact with coiled material 2. That is, coiled material 2 was disposed on the other of the members of each of first and second clamps 51 and 52 opposite to the one of the members of the clamps with coiled material 2 posed therebetween, and the one member was lowered and thus brought into contact with coiled material 2 to bring conduction terminal 41 into contact with coiled material 2.

Machine parts manufacturing apparatus 10 shown in Fig. 35 was used to apply a tension of 10 MPa to coiled material 2 in a direction in which coiled material 2 extended, and in that condition, ohmic-heat coiled material 2 in an atmosphere of the air to the temperature of the A₁ transformation point or higher, i.e., 1000°C, and thereafter die-quench it. That is, first clamp 51 and second clamp 52 pulled coiled material 2 in an amount equal to or less than an amount of extension of coiled material 2 through thermal expansion (coiled material 2's thermal expansion coefficient (10 × 10⁻⁵/°C)) multiplied by distance L mm between the first portion and the second portion multiplied by variation in temperature ΔT°C after coil material 2 was clamped. Further, after the die-quenching, the resultant formed body was subjected to a tumbler treatment as an oxide scale removing step.

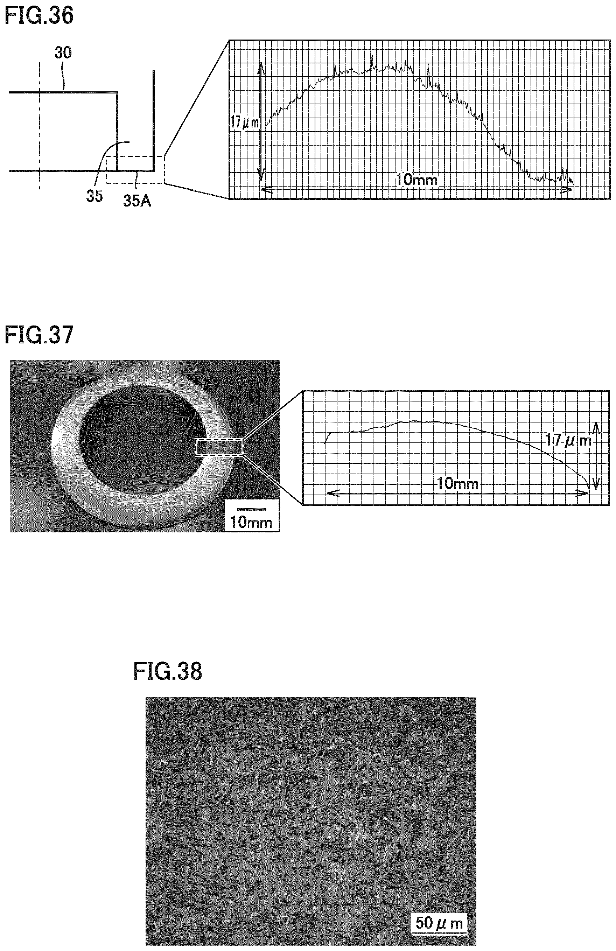

Referring to Fig. 36, an enlargement of a portion surrounded in the figure by a dotted line is shown on the right side in the figure. Machine parts manufacturing apparatus 10 of Fig. 35 includes the fist die, or pressing die 30, having pressing portion 35 with a lowermost surface, as surround by a dotted line, having curved surface 35A warped by 17 µm at maximum for a range in width of 10 mm. Although not shown, machine parts manufacturing apparatus 10 of Fig. 35 includes the second die, or base 36, having a flat surface.

Referring to Fig. 37, bearing washer 11 is formed by performing die-quenching such as punching coiled material 2 using machine parts manufacturing apparatus 10 having the first and second dies. It has been confirmed that bearing washer 11 had one major surface having convex surface 11B (see Figs. 10 and 17) as curved surface 35A of pressing portion 35 was transferred thereto. Convex surface 11B had a maximum warpage of 17 µm for the range of 10 mm in width.

In this way a plurality of bearing washers 11 (steel: SAE 1070) were manufactured and subjected to Vickers hardness measurement, and found to have an average hardness of about 790 HV. In addition, when bearing washer 11 had a portion cut, a cut surface corroded with nital, and its microstructure observed with an optical microscope, a martensite structure as shown in the photograph of Fig. 38 was confirmed.

Thus, it has been confirmed that the bearing washer manufacturing method according to the present embodiment allows bearing washer 11 to be manufactured through a shorter process, sufficiently quenched to have large hardness, and also have high processing quality. Moreover, it is believed that the bearing washer having a surface with convex surface 11B (see Fig. 10 and Fig. 17) can suppress damage caused by edge loading, and heat generated by differential slip.

While embodiments and examples of the present invention have been described as above, the embodiments can be variously modified. Further, the present invention is not limited in scope to the above-described embodiments. The scope of the present invention is defined by the terms of the claims, and is intended to include any modifications within the meaning and scope equivalent to the terms of the claims.

### INDUSTRIAL APPLICABILITY

The bearing ring manufacturing method of the present invention is particularly advantageously applicable to a method for manufacturing a bearing ring required to be processed with high precision.

### REFERENCE SIGNS LIST

1 thrust needle roller bearing, 2, 200 coiled material, 3 processing unit, 4 heating unit, 5 tensioning unit, 6 controller, 10 machine parts manufacturing apparatus, 11 bearing washer, 11A bearing washer raceway surface, 11B convex surface, 11C flat surface, 11D bent portion, 12 needle roller, 12A roller rolling surface, 13 cage, 30 pressing die, 31, 32 forming die, 31A, 32A convex portion, 35 pressing portion, 35A, 36A curved surface, 35B cutout portion, 35C water cooling circuit, 36 base, 41 conduction terminal, 42 stabilized DC power supply, 51 first clamp, 52 second clamp, 53, 54 cylinder, 60 supply unit, 70 correction unit, 100 object to be heated, 102 heating element, 103 coil, 104 AC power supply, 105 internal heating roll, 106 external heating roll, 200 formed body, 300, 310, 320, 330 die, 400 carburizing furnace, 410 bar, 420 blast, 430 tempering furnace.

## Claims

1. A method for manufacturing a bearing washer, comprising:
preparing a steel material and a forming unit for obtaining the bearing washer from the steel material;
setting the steel material in the forming unit; and
heating the steel material in the forming unit to a temperature equal to or higher than an A₁ transformation point and subsequently punching a portion of the steel material in a form of a ring in the forming unit, and thereafter subjecting the steel material in the form of the ring to a quenching treatment in the forming unit to obtain the bearing washer,
the steel material being heated and punched while tension is applied to the steel material in at least one direction along a surface of the steel material between first and second portions of the steel material distant from each other with the forming unit posed therebetween,
the tension being applied to increase a distance between the first and second portions of the steel material by a length corresponding to an amount by which the distance between the first and second portions of the steel material thermally expands as the steel material is heated to the temperature in the step of heating and punching,
the forming unit including a first die for punching the steel material and a second die facing the first die, the first die or the second die having a forming surface having a concave curved surface.

2. The method for manufacturing a bearing washer according to claim 1, wherein a die of the forming unit facing a die having the concave curved surface has a flat surface.

3. The method for manufacturing a bearing washer according to claim 1 or 2, wherein the steel material contains 0.4% by mass or more of carbon, has a thickness of 2 mm or less, and is punched in a form of a ring in a direction of the thickness.

4. The method for manufacturing a bearing washer according to any one of claims 1 to 3, wherein the steel material is heated in at least one method selected from the group consisting of ohmic heating, indirect resistor heating, induction heating, contact heat transfer, and far-infrared heating.

5. The method for manufacturing a bearing washer according to any one of claims 1 to 4, wherein the bearing washer with a hardness of 700 HV or more is obtained.

6. The method for manufacturing a bearing washer according to any one of claims 1 to 5, wherein
before the quenching treatment the steel material in the form of the ring is subjected to a forming step in the forming unit, and
in the forming step, the steel material in the form of the ring has an inward or outward peripheral portion bent to be directed in a direction of a thickness of the steel material in the form of the ring.
